# EUROPEAN PATENT APPLICATION

(11) **EP 3 135 102 A1**
(43) Date of publication of application: **01.03.2017**
(21) Application number: 16185707.3
(22) Date of filing: 25.08.2016
(51) Int. Cl.: A01G 7/00, A01G 25/16

(54) **PLANT CULTIVATION SUPPORTING APPARATUS, PLANT CULTIVATION SUPPORTING METHOD, PROGRAM, AND RECORDING MEDIUM**

(30) Priority: 28.08.2015 JP 2015169411
(71) Applicant: Ricoh Company, Ltd., Tokyo 143-8555 (JP)
(72) Inventor: NAKAMURA, Satoshi, Tokyo, 143-8555 (JP)
(74) Representative: Schwabe - Sandmair - Marx

(57) **Abstract**

A plant cultivation supporting apparatus (1) for supporting cultivation of a plant in accordance with evaluation of a state of the plant is disclosed. The plant cultivation supporting apparatus includes an evaluation unit (121) configured to obtain distance data that indicates a distance from a predetermined position to at least one point of the plant and derive a water stress evaluated value of the plant based on the distance data, the water stress evaluated value indicating a degree of water shortage in the plant; and a control unit (122) configured to determine, based on the water stress evaluated value, control to be applied to the plant and generate a control signal to be used for the control.

## Description

### BACKGROUND OF THE INVENTION

### 1. Field of the Invention

The present invention relates to a plant cultivation supporting apparatus, a plant cultivation supporting method, a program, and a recording medium.

### 2. Description of the Related Art

There is a technique called Speaking Plant Approach (SPA) for automatically diagnosing plants and controlling environmental conditions suitable for plant growth. This technique has attracted attention in recent years as an approach to facilitate reduction of labor for cultivation through recording of growth conditions of the plants and remote diagnosis of pathology, for example, or to facilitate realization of a high yield and high quality of agricultural products based on control of watering.

The control of watering may have an influence on fruits and vegetables. For example, if the fruits and vegetables cannot gain sufficient water after bearing fruit, the size of fruit may be reduced due to water stress and yield may drop. However, under moderate water stress, the resulting fruit will have higher sugar content. Farming methods using this technique produce agricultural products with high added value through the control of watering.

In view of such matters, there is a technique for obtaining a projected area of a plant leaf using an image input device, estimating a state of water stress based on a comparison of a maximum value in a previous projected area with a current projected area, and determining a time for liquid supply (see Patent Document 1, for example). This technique is contactless because the estimation of the water stress state is based on appearance. The technique has merits of reduced difficulty in introducing and operating than a method in the art that involves destructive measurement and attachment of electrodes to plants.

It is an object of at least one embodiment of the present invention to provide a plant cultivation supporting apparatus capable of evaluating a state of plants with high accuracy.

### Related Art Documents

[Patent Document 1] Japanese Unexamined Patent Application Publication No. 2007-306846

### SUMMARY OF THE INVENTION

In an embodiment, a plant cultivation supporting apparatus for supporting cultivation of a plant in accordance with evaluation of a state of the plant is provided. The plant cultivation supporting apparatus includes an evaluation unit configured to obtain distance data that indicates a distance from a predetermined position to at least one point of the plant and derive a water stress evaluated value of the plant based on the distance data, the water stress evaluated value indicating a degree of water shortage in the plant; and a control unit configured to determine, based on the water stress evaluated value, control to be applied to the plant and generate a control signal to be used for the control.

According to an embodiment of the present invention, it is possible to provide a plant cultivation supporting apparatus capable of evaluating a state of plants with high accuracy.

### BRIEF DESCRIPTION OF THE DRAWINGS

Other objects and further features of embodiments will become apparent from the following detailed description when read in conjunction with the accompanying drawings, in which:
FIG. 1 is a diagram depicting a plant cultivation supporting apparatus according to a first embodiment of the present invention;
FIG. 2 is a flowchart depicting a process performed by the plant cultivation supporting apparatus according to the first embodiment of the present invention;
FIG. 3 is a diagram depicting a plant cultivation supporting apparatus according to a variation of the first embodiment of the present invention;
FIG. 4 is a diagram depicting a plant cultivation supporting apparatus according to a second embodiment of the present invention;
FIG. 5 is a flowchart depicting a process performed by the plant cultivation supporting apparatus according to the second embodiment of the present invention; and
FIG. 6 is a flowchart depicting a process performed by a plant cultivation supporting apparatus according to a third embodiment of the present invention.

### DESCRIPTION OF THE EMBODIMENTS

In the following, embodiments of the present invention will be described in detail with reference to the accompanying drawings. In the drawings, the same constituent elements are given the same reference numerals and a redundant description may be omitted. In the following description, water and fertilizer may be collectively referred to as "nutrient liquid" and an act of feeding plants with the nutrient liquid may be referred to as "liquid supply."

### <First embodiment>

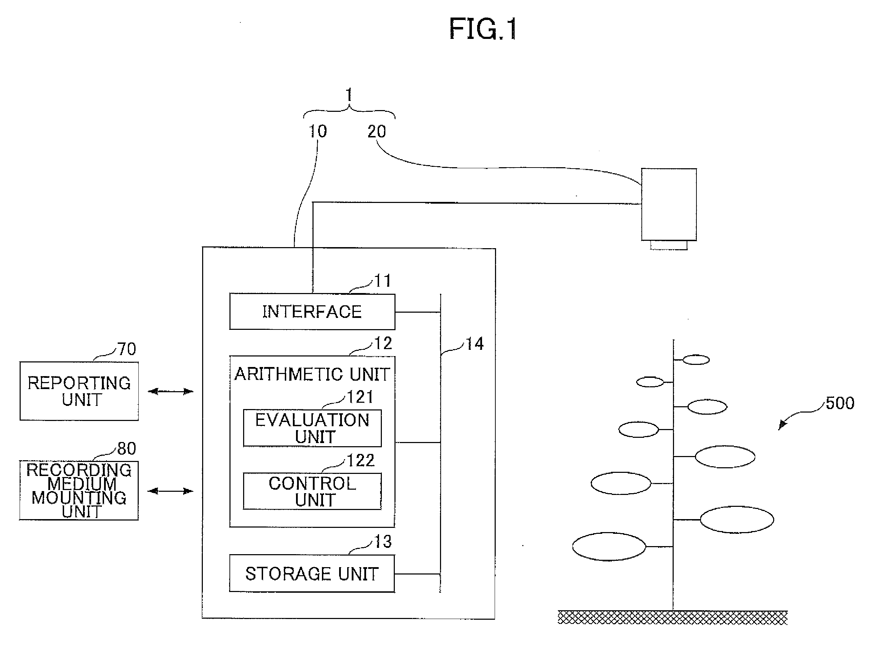

FIG. 1 is a diagram depicting a plant cultivation supporting apparatus 1 according to the first embodiment of the present invention. With reference to FIG. 1, the plant cultivation supporting apparatus 1 is an apparatus for supporting cultivation of plants based on an evaluation of a state of the plants. The plant cultivation supporting apparatus 1 includes, as main constituent elements, a computer 10 and a distance sensor 20. Although the computer 10 and the distance sensor 20 are separately illustrated in FIG. 1, these elements may be disposed in a single case in an integrated manner. For example, the distance sensor 20 may include a built-in computer and the built-in computer included in the distance sensor 20 may be configured to have functions of the computer 10. In addition, the state of the plants includes wilting of leaves, a degree of water stress, a growth level, and the like.

The computer 10 includes an interface 11, an arithmetic unit 12, and a storage unit 13. The interface 11, the arithmetic unit 12, and the storage unit 13 are interconnected via a bus 14. The computer 10 may be a personal computer (PC), for example.

The interface 11 has a function to communicate with the distance sensor 20. The arithmetic unit 12 is a Central Processing Unit (CPU), for example, and includes an evaluation unit 121 and a control unit 122. The storage unit 13 includes a Read Only Memory (ROM), a Random Access Memory (RAM), and the like. The storage unit 13 may include a non-volatile memory such as a Hard Disk Drive (HDD), a Solid State Drive (SSD), or the like. For example, functions of the evaluation unit 121 and the control unit 122 are implemented when the arithmetic unit 12 which is the CPU executes a program stored in the ROM in cooperation with the RAM.

The distance sensor 20 is configured to be able to communicate with the interface 11 of the computer 10. The communication may be either wired communication or wireless communication. The distance sensor 20 can obtain distance data indicating the distance to a plant 500 as a photographic subject at predetermined time intervals or in response to an instruction from the computer 10, for example.

The distance sensor 20 may employ a passive sensor (monocular camera, stereo camera, or the like) using shape from focus, passive stereo, or the like. Further, the distance sensor 20 may employ an active sensor (optical radar, projector camera system, or the like) using Time-of-Flight (TOF), active stereo, or the like. Further, the distance sensor 20 may be configured with a plurality of sensors of the same type or sensors of a plurality of types.

The monocular camera or the stereo camera is preferably employed as the distance sensor 20 in that an influence of sunlight (external light) is reduced in comparison with a method for detecting reflection of light emitted from an active distance sensor.

Distance data obtained by the distance sensor 20 is sent to the computer 10 and is stored in the storage unit 13 via the interface 11. The stored distance data is read by the arithmetic unit 12 from the storage unit 13. The evaluation unit 121 obtains the distance data, estimates a water stress state of the plant 500 based on the obtained distance data, and derives a water stress evaluated value. The water stress evaluated value is an evaluated value that indicates a degree of water shortage in a plant.

The control unit 122 determines control to be applied to the plant 500 based on the water stress evaluated value derived by the evaluation unit 121 and generates a control signal to be used for the control. For example, the control unit 122 determines necessity of liquid supply to the plant 500, determines the liquid supply as the control to be applied to the plant 500, and generates a control signal to be used for the liquid supply.

The computer 10 is configured to be connectable to a reporting unit 70. If the liquid supply is determined to be necessary by the control unit 122, a control signal generated by the control unit 122 is transmitted to the reporting unit 70, so that the reporting unit 70 can report that the liquid supply is necessary.

The report of necessity for the liquid supply may be realized by a method for sounding a buzzer or a method for turning on a revolving light, for example. Further, the report of necessity for the liquid supply may be realized by a method for contacting, via mail or phone, a contact address set in advance. Alternatively, the report of necessity may be visually performed using an application dedicated to smartphones instead of the mail or the phone.

The computer 10 is configured to be connectable to a recording medium mounting unit 80. On the recording medium mounting unit 80, it is possible to detachably mount a recording medium in which a program to be executed by the arithmetic unit 12 is stored. Examples of the recording medium that can be mounted on the recording medium mounting unit 80 include a Universal Serial Bus (USB) memory, an SD memory, a Compact Disc (CD), a Digital Versatile Disc (DVD), and a Blue-ray Disc (BD). However, the program to be executed by the arithmetic unit 12 may be downloaded to the storage unit 13 via a network without using the recording medium mounting unit 80.

Although the distance sensor 20 may be disposed in any location as long as the distance sensor 20 can have the plant 500 within a view angle, it is preferable to dispose the distance sensor 20 in a location almost vertically above the plant 500.

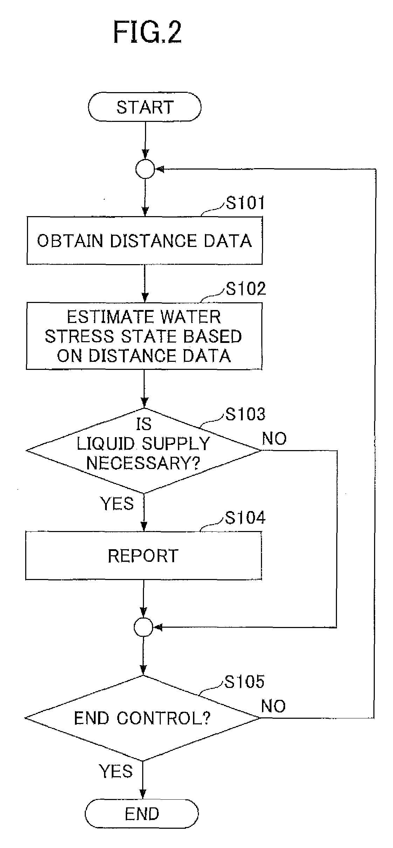

In the following, a plant cultivation supporting method using the plant cultivation supporting apparatus 1 is described. FIG. 2 is a flowchart depicting a process performed by the plant cultivation supporting apparatus 1 according to the first embodiment of the present invention. The process performed by the plant cultivation supporting apparatus 1 is described in detail with reference to FIG. 2.

First, in step S101, the computer 10 obtains distance data from the distance sensor 20. Specifically, the evaluation unit 121 within the arithmetic unit 12 obtains the distance data indicating the distance from the distance sensor 20 to the plant 500 at a predetermined time. For example, if a stereo camera is used as the distance sensor 20, the distance sensor 20 can process within the stereo camera, two images captured respectively by two cameras constituting the stereo camera, such that the two images are converted into distance data. In this case, the evaluation unit 121 within the arithmetic unit 12 obtains the distance data converted within the stereo camera.

In addition, the predetermined time refers to a time when a trigger signal is received from the computer 10, for example. Further, the predetermined time may be a time determined based on a time set in advance or time intervals. Alternatively, the distance sensor 20 may generate the trigger signal (the distance sensor 20 may determine the predetermined time by itself).

In step S101, distance data indicating the distance from a predetermined position (where the distance sensor 20 is disposed) to at least one point of the plant 500 may be obtained. In other words, the distance data may be obtained from only one point or from a plurality of points in space. Further, sets of distance data obtained from the plurality of points in space may be integrated and converted into a representative value (average value, medium value, standard deviation, or the like) and the representative value may be used. In the following, a case where distance data is obtained from a plurality of points in space is described as an example.

Next, in step S102, the computer 10 estimates a water stress state based on the distance data. Specifically, the evaluation unit 121 within the arithmetic unit 12 estimates the water stress state of the plant 500 based on the distance data obtained from the distance sensor 20 and derives a water stress evaluated value. Examples of a method for estimating the water stress state from the distance data include the following.

A first example is estimation based on a calibration curve. In other words, a water stress state of a plant is measured in advance using a method such as a destructive measurement method. Then, distance data obtained by measuring the same plant at the same time is associated with the water stress state to draw the calibration curve. By using this calibration curve, it is possible to estimate a water stress state based on distance data on a certain plant at a given time.

A second example is estimation based on an amount of change of distance. In other words, a representative value D0 of distance data in a state where no wilting occurs is extracted from distance data in a predetermined time range before a time when a water stress state is estimated. By comparing this representative value D0 with a representative value Dt of distance data at a given time, a wilting rate indicating a degree of wilting of leaves is calculated. Examples of a comparison method include a method for obtaining a ratio of the D0 to the Dt and a method for obtaining a difference between the D0 and the Dt. Based on this wilting rate, it is possible to estimate a water stress state using a calibration curve created in the same procedure as described above, for example.

A third example is estimation based on a three-dimensional shape. In other words, based on spatially obtained distance data, the shape of the whole plant and the shape of leaves are restored in three dimensions. A water stress state is estimated using this three-dimensional shape. In this case, it is necessary to obtain distance data in detail to an extent such that the shape of the whole plant and the shape of leaves can be restored in three dimensions.

If the shape of the whole plant is used, a standard shape of the whole plant in a state where no wilting occurs is stored so that a degree of wilting of leaves can be estimated based on a degree of change from the standard shape. In one example of such a method, the width and the volume of a crown in a state where no wilting occurs are set as the standard shape and the width and a percentage of the volume of the crown at a current time are converted into the degree of wilting of leaves using a calibration curve created in advance.

Further, if the shape of leaves is used, an inclination of leaves relative to a horizontal plane is obtained so that the degree of wilting of leaves can be estimated based on the magnitude of the inclination.

Whether the shape of the whole plant is used or the shape of leaves is used, it is possible to estimate a water stress state from an obtained degree of wilting of leaves and a corresponding relation between a degree of wilting of leaves set in advance and a water stress state.

In addition, the water stress state estimated as described above may be an index to be used as an indication of a water stress state of a plant. It is not necessary to obtain a strict value of water stress applied to the plant.

Distance data obtained from the distance sensor 20 may include a distance not only to the ground but also to agricultural utensils such as a pole or a guiding cord as noise in addition to a distance to a plant. If a water stress state is estimated using such distance data mixed with noise, an estimation result may have a large error. Accordingly, it is desirable to remove such a noise where necessary.

For example, it is possible to calculate the distance to the ground based on the height of the distance sensor 20, so that distance data corresponding to the ground can be removed. Further, it is possible to remove the distance to the agricultural utensils by taking out a difference between distance data obtained in advance in a state where a plant is not present and distance data including the plant.

Further, an object other than the plant may be specified based on characteristics of a color and a shape from an image captured by a camera and data corresponding to this object may be selectively excluded from distance data. This method may be applied to a distance sensor that employs a camera as a matter of course but can also be applied to a distance sensor without a camera if the camera is added to the distance sensor.

Next, in step S103, the computer 10 determines necessity of liquid supply based on the water stress state. Specifically, the control unit 122 within the arithmetic unit 12 determines necessity of liquid supply to the plant 500 based on the water stress state estimated in step S 102 by the evaluation unit 121. It is possible to determine the necessity of liquid supply based on whether the water stress state exceeds a threshold set in advance, for example.

In step S103, if the liquid supply is determined to be necessary (Yes), the process proceeds to step S104. If the liquid supply is not determined to be necessary (No), the process proceeds to step S105.

In step S104, the reporting unit 70 performs a predetermined report. In other words, if the control unit 122 determines that the liquid supply is necessary, the arithmetic unit 12 transmits information to the reporting unit 70 and the reporting unit 70 reports that the liquid supply is necessary. Specific examples of the report that the liquid supply are described above.

Steps S101 to S104 are a series of processes performed in single acquisition of distance data. When these steps are completed, whether to end control is determined in step S105. If the control is determined to end in step S105 (Yes), the control ends. If the control is not determined to end in step S105 (No), the process returns to step S101 and, at a predetermined time or after a predetermined time interval, the processes in steps S101 to S104 are repeated.

In the above description, the plant 500 is directly observed without a special mechanism. However, a marker or the like may be attached to the plant 500 in order to obtain distance data more stably and with higher accuracy using the distance sensor 20. For example, if the distance sensor 20 employs an optical radar or a projector camera system in which reflection of light from a photographic subject is used, a method for coating the plant 500 with a retroreflective material that reflects light in a direction of incidence may be used.

Further, if the distance sensor 20 employs a stereo camera using a visual pattern of a photographic subject, a method for attaching a spherical marker or a marker in which geometrical figures are combined to the plant 500 may be used so as to facilitate detection of the pattern. Further, in order for the distance sensor 20 to easily distinguish the plant 500 as a photographic subject from a floor or a wall as a background, the background may be covered with a sheet having a color different from the plant 500.

In this manner, the plant cultivation supporting apparatus 1 according to the first embodiment can evaluate a state of the plant 500 with improved accuracy by observing a temporal change in appearance of the plant 500 using the distance sensor 20. More specifically, the plant cultivation supporting apparatus 1 can evaluate a water stress state of the plant 500 with improved accuracy in a contactless manner using information about a distance to a particular region of the plant 500 such as leaves or a stem obtained from the distance sensor 20 disposed above the plant 500, so that the plant cultivation supporting apparatus 1 can support plant cultivation.

In other words, with the use of the distance sensor 20, it is possible to determine a change in appearance of the plant 500 as a change of the distance from the distance sensor 20 to the plant 500. Pendulousness of leaves resulting from wilting of the leaves leads to an increase of an average distance from the distance sensor 20 to the leaves. Accordingly, by following a temporal change of an average distance to the leaves, it is possible to estimate a degree of the wilting of the leaves and the magnitude of water stress which is a factor of the wilting. In addition, the distance sensor 20 directly observes a change of the shape of the leaves.

Further, by determining the magnitude of water stress, it is possible to determine an amount of watering and a time appropriately. In general plant cultivation in a farm, a predetermined amount of watering is performed at a predetermined time. However, an optimum amount of watering and a watering time are different every day due to a water stress state of a plant resulting from an environmental factor and growth conditions of the plant. If water is given more than necessary, the water may be diffused and wasted without being absorbed by the plant or may stay in soil to become a cause of root rot. By contrast, if only water that does not meet a necessary level is given, the plant may wither up and die.

The plant cultivation supporting apparatus 1 can realize optimum watering control depending on cultivation purposes by determining the water stress state of the plant 500 in real time and performing watering with a necessary amount to solve the water stress at an appropriate time. In other words, it is possible to appropriately control an amount of watering or fertilizer and a time by using a water stress evaluated value, so that it is possible to stably and easily produce agricultural products having a high yield and high quality. Further, it is possible to support appropriate liquid supply control and prevent excess or deficiency of nutrient liquid by reporting when the water stress meets a predetermined criterion.

In addition, although the plant cultivation supporting apparatus 1 includes the computer 10 and the distance sensor 20 as constituent elements, the plant cultivation supporting apparatus 1 may be configured with only the computer 10. In this case, the computer 10 obtains distance data from a distance sensor prepared separately from the computer 10 and the computer 10 derives a water stress evaluated value of the plant 500 based on the obtained distance data, for example.

### <Variation of first embodiment>

In a variation of the first embodiment, the arithmetic unit 12 derives distance data. In addition, in the variation of the first embodiment, descriptions of the same constituent elements as in the embodiment already described may be omitted.

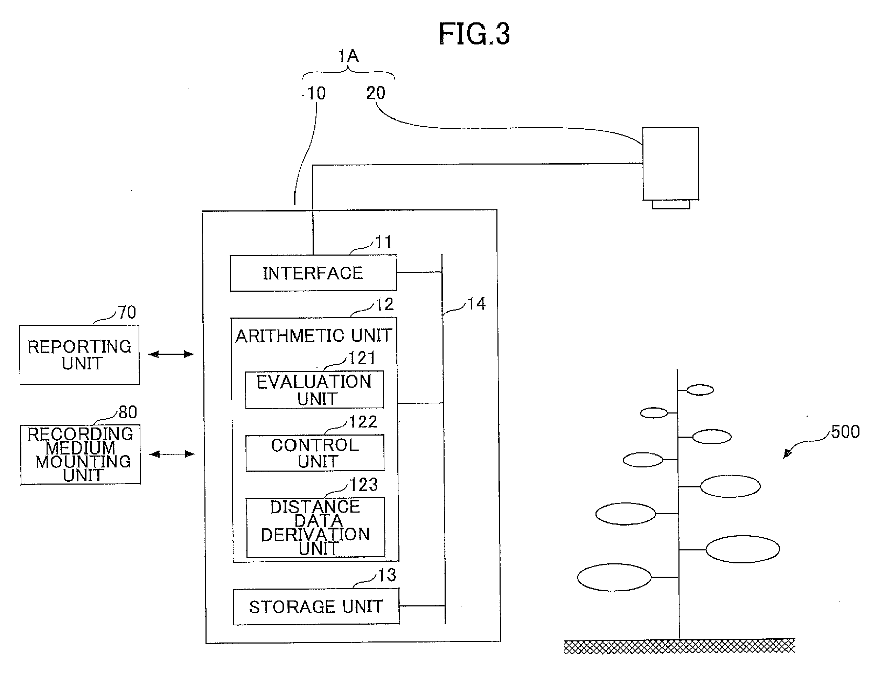

FIG. 3 is a diagram depicting a plant cultivation supporting apparatus 1A according to the variation of the first embodiment of the present invention. With reference to FIG. 3, the plant cultivation supporting apparatus 1A according to the variation of the first embodiment is different from the plant cultivation supporting apparatus 1 (see FIG. 1) according to the first embodiment in that the arithmetic unit 12 includes a distance data derivation unit 123.

The distance data derivation unit 123 has a function to obtain distance information from the distance sensor 20, the distance information being necessary for deriving distance data, and derive the distance data based on the obtained distance information. In other words, in the plant cultivation supporting apparatus 1A, the distance sensor 20 obtains only distance information necessary for deriving distance data and transmits the distance information to the computer 10. Then the distance data derivation unit 123 within the arithmetic unit 12 of the computer 10 derives the distance data based on the distance information obtained from the distance sensor 20.

For example, if the distance sensor 20 employs a stereo camera, two images captured by the respective two cameras constituting the stereo camera are transmitted as the distance information to the computer 10 in step S101 of FIG. 2. The distance data derivation unit 123 within the arithmetic unit 12 of the computer 10 derives the distance data based on the two images which contain the distance information.

In this manner, the distance sensor 20 itself may derive distance data. Alternatively, the distance sensor 20 may obtain distance information necessary for deriving distance data and the distance data derivation unit 123 may derive the distance data based on the distance information obtained by the distance sensor 20.

In addition, the plant cultivation supporting apparatus 1A may be configured with only the computer 10. In this case, the computer 10 obtains distance information from a distance sensor prepared separately from the computer 10, the distance information being necessary for deriving distance data, and the computer 10 derives the distance data. Then the computer 10 derives a water stress evaluated value of the plant 500 based on the derived distance data, for example.

### <Second embodiment>

In the second embodiment, a plant cultivation supporting apparatus 2 includes a liquid supply unit 30. In addition, in the second embodiment, descriptions of the same constituent elements as in the embodiment already described may be omitted.

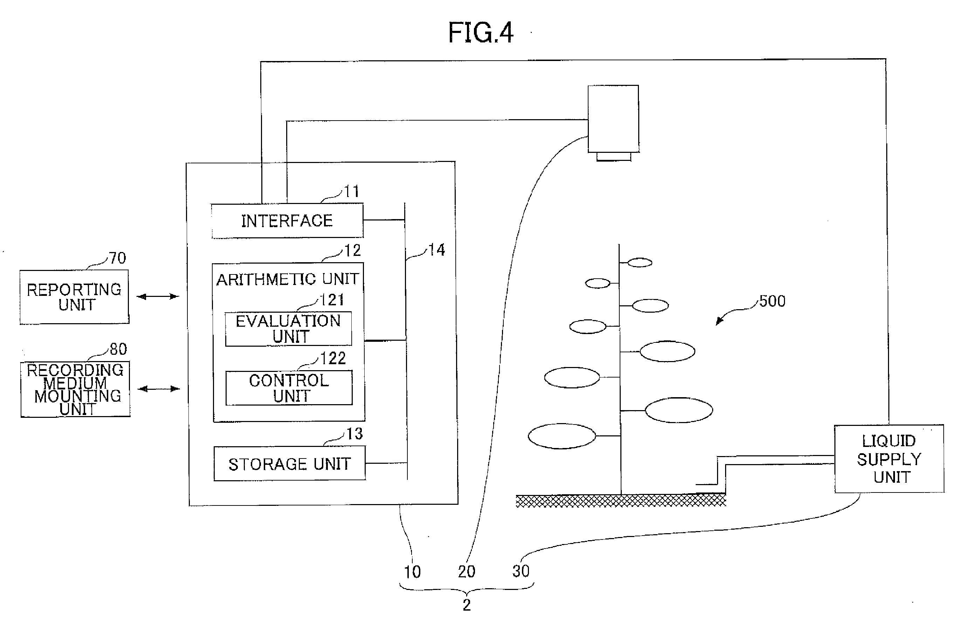

FIG. 4 is a diagram depicting the plant cultivation supporting apparatus 2 according to the second embodiment of the present invention. With reference to FIG. 4, the plant cultivation supporting apparatus 2 according to the second embodiment is different from the plant cultivation supporting apparatus 1 (see FIG. 1) according to the first embodiment in that the plant cultivation supporting apparatus 2 includes the liquid supply unit 30. Further, the interface 11 of the computer 10 is configured to be able to communicate with the distance sensor 20 and the liquid supply unit 30.

The distance sensor 20 obtains distance data indicating the distance to the plant 500 as a photographic subject at predetermined time intervals or in response to an instruction from the computer 10, for example. The obtained distance data is sent to the computer 10 and is stored in the storage unit 13 via the interface 11. The stored distance data is read from the storage unit 13 and is processed by the arithmetic unit 12, so that necessity of liquid supply is determined. If the liquid supply is necessary, an amount of the liquid supply (amount of supply of liquid) and a time are determined.

At the time to perform the liquid supply, the arithmetic unit 12 reports the liquid supply amount to the liquid supply unit 30 via the interface 11. The liquid supply unit 30 supplies, in response to reception of the report from the computer 10, the plant 500 with liquid having a specified amount.

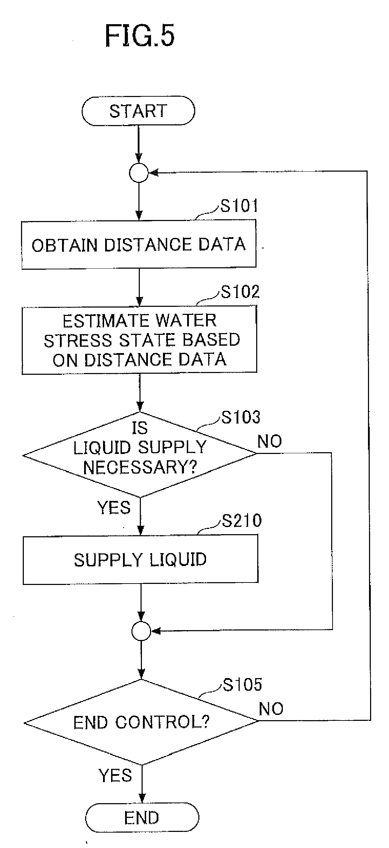

In the following, a plant cultivation supporting method using the plant cultivation supporting apparatus 2 is described. FIG. 5 is a flowchart depicting a process performed by the plant cultivation supporting apparatus 2 according to the second embodiment of the present invention. The process performed by the plant cultivation supporting apparatus 2 is described in detail with reference to FIG. 5.

First, the same processes as in steps S101 to S103 of FIG. 2 are performed. However, in step S103, the control unit 122 within the arithmetic unit 12 determines the necessity of liquid supply using a liquid supply amount and a liquid supply time set in advance. Further, if the control unit 122 within the arithmetic unit 12 also determines the liquid supply amount and the liquid supply time, the control unit 122 may refer to a table in which a water stress state set in advance is associated with the liquid supply amount and the liquid supply time and determine the liquid supply amount and the liquid supply time.

In step S103, if the liquid supply is determined to be necessary (Yes), the process proceeds to step S210. If the liquid supply is not determined to be necessary (No), the process proceeds to step S105.

In step S210, the control unit 122 within the arithmetic unit 12 transmits information about the liquid supply amount and the liquid supply time to the liquid supply unit 30 via the interface 11. The liquid supply unit 30 supplies the plant 500 with liquid based on the received information. In addition, the control unit 122 may determine the liquid supply time and when the time has come, the control unit 122 may report the liquid supply amount to the liquid supply unit 30 to cause the liquid supply unit 30 to perform the liquid supply instantaneously.

Steps S101 to S210 are a series of processes performed in single acquisition of distance data. When these steps are completed, whether to end control is determined in step S105. If the control is determined to end in step S105 (Yes), the control ends. If the control is not determined to end in step S105 (No), the process returns to step S101 and, at a predetermined time or after a predetermined time interval, the processes in steps S101 to S210 are repeated.

In this manner, the plant cultivation supporting apparatus 2 according to the second embodiment includes the liquid supply unit 30 that supplies the plant 500 with liquid. The control unit 122 determines control to be applied to the plant 500 based on a water stress evaluated value and generates a control signal to be used for the control. For example, the control unit 122 determines the necessity of liquid supply to the plant 500, determines the liquid supply as the control to be applied to the plant 500, and generates a control signal to be used for the liquid supply. The liquid supply unit 30 automatically supplies the plant 500 with liquid based on the control signal generated by the control unit 122. In this case, the control unit 122 may determine the liquid supply amount and the liquid supply time for the plant 500 in addition to the necessity of liquid supply.

By continuously monitoring a state of the plant 500 and determining a required amount of water using the plant cultivation supporting apparatus 2, it is possible to automatically perform liquid supply with an appropriate amount at an appropriate time. In accordance with this, it is possible to realize optimum liquid supply control automatically. Further, with the automated liquid supply, it is possible to prevent human error, reduce labor of work, and realize high quality. Further, it is possible to realize plant cultivation in a huge farm or the like with fewer workers.

In addition, although the plant cultivation supporting apparatus 2 includes the computer 10, the distance sensor 20, and the liquid supply unit 30 as constituent elements, the plant cultivation supporting apparatus 2 may be configured with only the computer 10. In this case, the computer 10 obtains distance data from a distance sensor prepared separately from the computer 10 and the computer 10 derives a water stress evaluated value of the plant 500 based on the obtained distance data, for example. Further, information is transmitted to the liquid supply unit 30 prepared separately from the computer 10 and liquid supply is performed.

### <Third embodiment>

In the third embodiment, the plant cultivation supporting apparatus 2 according to the second embodiment is used to automatically determine the liquid supply amount and the time. In addition, in the third embodiment, descriptions of the same constituent elements as in the embodiments already described may be omitted.

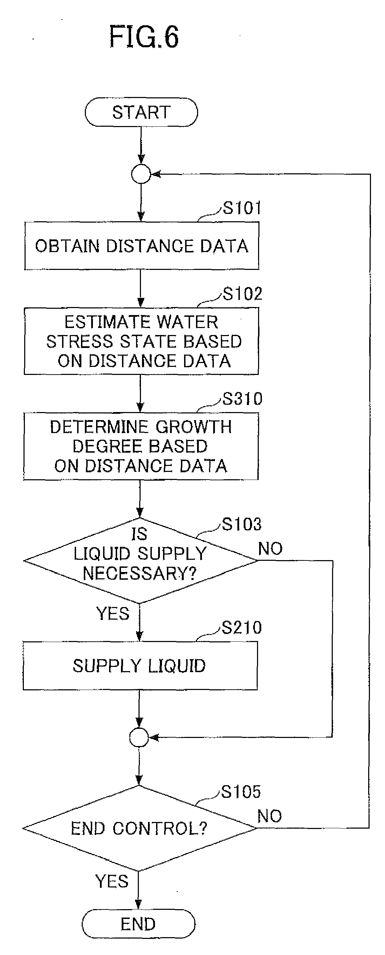

FIG. 6 is a flowchart depicting a process performed by the plant cultivation supporting apparatus 2 according to the third embodiment of the present invention. The process performed by the plant cultivation supporting apparatus 2 is described in detail with reference to FIG. 6.

First, the same processes as in steps S101 to S102 of FIG. 2 are performed. Next, in step S310, the computer 10 estimates a growth degree based on distance data. Specifically, the evaluation unit 121 within the arithmetic unit 12 estimates the growth degree of the plant 500 based on the distance data and derives a growth evaluated value that indicates a state of growth of the plant 500.

In other words, as the height of the plant 500 is increased in accordance with growth, the distance from the distance sensor 20 to leaves is reduced. Accordingly, by following a temporal change of the distance to the leaves, it is possible to estimate the height of the plant 500, namely, the growth degree. In addition, wilting of the leaves and the growth of the plant 500 are changes acting in opposite directions relative to the distance from the distance sensor 20. However, the former is a short term change while the latter is a long term change, so that it is possible to easily separate the changes using frequency analysis in a direction of the time axis.

Examples of a specific method for estimating the growth degree based on the distance data include the following. A first example is estimation based on a calibration curve. In other words, the height, a leaf area, and the like representing the growth degree of the plant 500 are measured in advance and distance data obtained by measuring the same plant 500 at the same time is associated with these items to draw the calibration curve. By using this calibration curve, it is possible to estimate a growth degree based on distance data at a given time.

A second example is estimation based on distance. In other words, by deriving a representative value from distance data in a predetermined time range, it is possible to estimate the height of a plant and use it as a criterion for a growth degree.

A third example is estimation based on a three-dimensional shape. In other words, based on spatially obtained distance data, the shape of the whole plant and the shape of leaves are restored in three dimensions. From the three-dimensional shape, the width and the volume of a crown are estimated to obtain a growth degree.

In addition, the growth degree estimated as described above may be an index to be used as an indication. It is not necessary to obtain a strict value of growth.

Further, although the growth degree is estimated each time distance data is obtained in the flowchart of FIG. 6, the estimation is not limited to this. Because growth of a plant is a phenomenon that occurs in longer time intervals than wilting of leaves, a growth degree may be estimated once a day, for example, and the same value may be used until the next estimation. Further, it is desirable to estimate the growth degree at a time when no wilting of leaves occurs.

Next, the same process as in step S103 of FIG. 2 is performed. However, in step S103, it is desirable to change a liquid supply amount and a time in accordance with the growth degree of the plant. For example, by creating a table in which these items are associated in advance and referring to this table, it is possible to determine the liquid supply amount and the time. Further, fertilizer may be changed in accordance with an estimated growth degree. For example, it is possible to supply the plant with nutrient liquid suitable for a growth stage by controlling amounts or types of water and fertilizer where necessary that are mixed upon preparation of the nutrient liquid.

In step S103, if the liquid supply is determined to be necessary (Yes), the process proceeds to step S210. If the liquid supply is not determined to be necessary (No), the process proceeds to step S105.

Steps S101 to S210 are a series of processes performed in single acquisition of distance data. When these steps are completed, whether to end control is determined in step S105. If the control is determined to end in step S105 (Yes), the control ends. If the control is not determined to end in step S105 (No), the process returns to step S101 and, at a predetermined time or after a predetermined time interval, the processes in steps S101 to S210 are repeated.

In this manner, in the plant cultivation supporting apparatus 2 according to the third embodiment, the evaluation unit 121 derives a growth evaluated value that indicates a state of growth of the plant 500 based on distance data in addition to a water stress evaluated value. Further, the control unit 122 determines control (liquid supply amount and time) to be applied to the plant 500 based on the water stress evaluated value and the growth evaluated value derived by the evaluation unit 121 and generates a control signal to be used for the control.

In other words, the plant cultivation supporting apparatus 2 always monitors the plant 500 which is an observation object and determines the liquid supply amount and the time depending on the growth degree of the plant 500. Accordingly, it is possible to control an amount of watering, the time, and even an amount and a type of fertilizer, so that it is possible to realize optimum liquid supply control in each growth stage.

An optimum amount of watering and a watering time are different depending on growth conditions of the plant 500. Even if the same level of water stress is applied, an immature plant and a mature plant are different in size. Accordingly, it is easy to imagine that a required amount of water is different. In view of this, it is possible to realize more appropriate watering control than in related art by always determining growth conditions of the plant 500.

Further, in the plant cultivation supporting apparatus 2, the control unit 122 may determine, based on a growth evaluated value (depending on the growth degree of the plant 500), information about a type or concentration of nutrient liquid that should be supplied to the plant 500 by the liquid supply unit 30 and may generate a control signal including the determined information. In accordance with this, it is possible to supply fertilizer of an appropriate type or nutrient liquid having that concentration in accordance with a growth stage of the plant 500.

### <Fourth embodiment>

In the fourth embodiment, an observation area is limited in proximity to a growing point in the first to third embodiments. In addition, in the fourth embodiment, descriptions of the same constituent elements as in the embodiments already described may be omitted.

In the first to third embodiments, a water stress state is estimated based on distance data on the whole plant. However, the estimation is not limited to this. Young leaves are more likely to wilt due to water stress than mature leaves. Accordingly, if the young leaves are set as a target to evaluate wilting, water stress is expected to be detected earlier and with higher accuracy than the whole plant.

Accordingly, the fourth embodiment focuses on a vicinity of the growing point upon estimating a water stress state. For example, from the distance data, data only on the vicinity of the growing point of the plant is selected and the water stress state is estimated based on a change. In other words, while wilting of leaves of the whole plant is evaluated in other embodiments, wilting of leaves only in an upper portion is evaluated in the fourth embodiment.

Specifically, because young leaves are present in a relatively high portion of the plant, the water stress evaluated value and the like are derived using, among the distance data, only a part of the distance data which corresponds to the relatively high portion of the plant. Examples of a method for selecting the distance data which corresponds to the relatively high portion include the following.

A first example is selection based on an absolute value of height. For example, the height of the plant is estimated using the method described in the third embodiment, for example, so that distance data within a range of a vertical location determined in advance depending on the height of the plant can be extracted.

A second example is selection based on the distance from a growing point. In other words, the shape of the plant is determined from spatially obtained distance data and the highest portion is handled as the growing point. Then a predetermined range from the height of the growing point is set in a vertical direction and distance data included in the range is selected. The distance data on young leaves in the vicinity of the growing point extracted as described above is used, so that a water stress state is estimated in step S102 of FIG. 6, for example.

In this manner, according to the fourth embodiment, an evaluation object is limited to the vicinity of the growing point which is most likely to have a change in appearance due to wilting. In accordance with this, it is possible to estimate a water stress state and a growth degree with higher accuracy and higher sensitivity as compared with the other embodiments, so that it is possible to determine an optimum liquid supply amount and a liquid supply time.

Although the preferable embodiments are described above, the present invention is not limited to the above-mentioned embodiments but various types of modifications and replacements can be added to the above-mentioned embodiments without departing from the scope of the claims.

## Claims

1. A plant cultivation supporting apparatus for supporting cultivation of a plant in accordance with evaluation of a state of the plant, the plant cultivation supporting apparatus comprising:
an evaluation unit configured to obtain distance data that indicates a distance from a predetermined position to at least one point of the plant and derive a water stress evaluated value of the plant based on the distance data, the water stress evaluated value indicating a degree of water shortage in the plant; and
a control unit configured to determine, based on the water stress evaluated value, control to be applied to the plant and generate a control signal to be used for the control.

2. The plant cultivation supporting apparatus according to claim 1,
wherein the evaluation unit derives the water stress evaluated value using, among the distance data, only a part of the distance data which corresponds to a relatively high portion of the plant.

3. The plant cultivation supporting apparatus according to claim 1 or 2,
wherein in addition to the water stress evaluated value, the evaluation unit derives, based on the distance data, a growth evaluated value that indicates a state of growth of the plant and
wherein the control unit determines, based on the water stress evaluated value and the growth evaluated value, the control to be applied to the plant and generates a control signal to be used for the control.

4. The plant cultivation supporting apparatus according to any one of claims 1 to 3, further comprising:
a liquid supply unit configured to supply liquid to the plant,
wherein the control unit determines, based on the water stress evaluated value, an amount of supply of the liquid to be supplied to the plant by the liquid supply unit and generates the control signal including the amount of supply, and
wherein the liquid supply unit supplies the liquid to the plant based on the control signal.

5. The plant cultivation supporting apparatus according to claim 3, further comprising:
a liquid supply unit configured to supply liquid to the plant,
wherein the control unit determines, based on the growth evaluated value, information about a type or concentration of the liquid to be supplied to the plant by the liquid supply unit and generates the control signal including the information, and
wherein the liquid supply unit supplies the liquid to the plant based on the control signal.

6. The plant cultivation supporting apparatus according to any one of claims 1 to 5, further comprising:
a distance sensor configured to measure a distance to at least the one point of the plant and derive the distance data.

7. The plant cultivation supporting apparatus according to any one of claims 1 to 5, further comprising:
a distance sensor configured to measure a distance to at least the one point of the plant and obtain distance information necessary for deriving the distance data; and
a distance data derivation unit configured to derive the distance data based on the distance information.

8. The plant cultivation supporting apparatus according to claim 6 or 7, wherein the evaluation unit, the control unit, and the distance sensor are disposed in a single case in an integrated manner.

9. A plant cultivation supporting method for supporting cultivation of a plant in accordance with evaluation of a state of the plant, the plant cultivation supporting method comprising:
obtaining distance data that indicates a distance from a predetermined position to at least one point of the plant and deriving a water stress evaluated value of the plant based on the distance data, the water stress evaluated value indicating a degree of water shortage in the plant; and
determining, based on the water stress evaluated value, control to be applied to the plant and generating a control signal to be used for the control.

10. The plant cultivation supporting method according to claim 9,
wherein in the derivation of the water stress evaluated value, among the distance data, only a part of the distance data which corresponds to a relatively high portion of the plant is used to derive the water stress evaluated value.

11. A computer-readable program that, when executed by a computer, causes the computer to perform the plant cultivation supporting method according to claim 9 or 10.

12. A non-transitory recording medium storing the computer-readable program according to claim 11.
